# EUROPÄISCHE PATENTANMELDUNG

(11) **EP 4 464 556 A1**
(43) Veröffentlichungstag der Anmeldung: **20.11.2024**
(21) Anmeldenummer: 23173350.2
(22) Anmeldetag: 15.05.2023
(51) Int. Cl.: B60P 3/34, E04H 15/06

(54) **FAHRZEUG MIT FAHRZEUGINNENRAUM-ERWEITERUNG**

(71) Anmelder: X GLOO GmbH & Co. KG, 83250 Marquartstein (DE)
(72) Erfinder: HUBER, Florian, 83224 Grassau (DE)
(74) Vertreter: Winter, Brandl - Partnerschaft mbB

(57) **Zusammenfassung**

Die vorliegende Offenbarung betrifft ein Fahrzeug (1), insbesondere ein Kastenwagen oder Camper-Van, mit einer Fahrzeugseitenwand (2), die einen Hauptabschnitt (4) und einen Ausklappabschnitt (6) aufweist, wobei der Ausklappabschnitt (6) in einem eingeklappten Zustand im Wesentlichen bündig mit dem Hauptabschnitt (4) abschließt und in einem ausgeklappten Zustand aus dem Hauptabschnitt (4) ausgeklappt ist und eine Fahrzeuginnenraum-Erweiterung (14) mit einer seitlichen Umwandung (16) aus einem flexiblen, ganz oder teilweise aufblasbaren textilen Element aufspannt. Die vorliegende Offenbarung betrifft ferner ein Verfahren zum Ausklappen einer Fahrzeuginnenraum-Erweiterung eines Fahrzeugs.

## Beschreibung

Die vorliegende Offenbarung betrifft ein Fahrzeug, insbesondere einen Kastenwagen oder Camper-Van, mit einer Fahrzeuginnenraum-Erweiterung. Die vorliegende Offenbarung betrifft ferner ein Verfahren zum Ausfahren einer Fahrzeuginnenraum-Erweiterung.

### Stand der Technik

Es ist bekannt, Fahrzeuge, die zum Wohnen geeignet sind, wie Kastenwägen, Camper-Vans oder Wohnmobile mit einer Erweiterung des Fahrzeuginnenraums bzw. einer Wohnraumvergrößerung bereitzustellen. Dabei gibt es beispielsweise Aufstelldächer, bei denen eine Fahrzeuginnenraum-Erweiterung aus dem Fahrzeugdach ausfahrbar ist, oder sogenannte slide-outs. Bei einem slide-out wird ein Teil der Fahrzeugseitenwand senkrecht zur Fahrzeugseitenwand nach außen ausgefahren. Herkömmliche slide-outs weisen starre Wände auf, die durch einen Betätigungsmechanismus, beispielsweise eine Gewindestange, nach außen gefahren werden. Bekannte slide-outs sind dabei oft elektronisch betätigt. Nachteilig an solchen Lösungen ist, dass die starren Bauteile im eingefahrenen Zustand den Fahrzeuginnenraum begrenzen.

Aus der WO 2019 / 197 412 A1 ist ein Fahrzeug mit einer Fahrzeugseitenwand und einem ausfahrbaren Seitenwandabschnitt bekannt. Der Seitenwandabschnitt ist dabei als starre Wand bzw. als starrer Abschnitt der Fahrzeugseitenwand ausgeführt. Durch das Aufblasen einer aufblasbaren Seitenwand kann der starre Seitenwandabschnitt aus der Fahrzeugseitenwand ausgefahren werden. Dadurch wird eine Fahrzeuginnenraum-Erweiterung gebildet. Im nicht aufgeblasenen Zustand kann die aufblasbare Seitenwand zusammengefaltet werden und benötigt dadurch keinen Platz im Fahrzeuginnenraum. Bei der Innenraum-Erweiterung der WO 2019 / 197 412 A1 ist der Boden der Fahrzeuginnenraum-Erweiterung aufblasbar ausgeführt. Das hat zur Folge, dass die Tragfähigkeit des Bodens begrenzt ist und der ausfahrbare Seitenwandabschnitt besonders bei Belastung instabil ist.

### Kurzbeschreibung der Offenbarung

Es ist also die Aufgabe der vorliegenden Offenbarung, die Nachteile des Stands der Technik zu überwinden oder zumindest zu mindern und insbesondere ein Fahrzeug mit einer in einfacher Weise aus- und einfahrbaren, robusten Innenraum-Erweiterung bereitzustellen, die insbesondere im eingefahrenen Zustand wenig Platz im Fahrzeuginnenraum einnimmt.

Diese Aufgabe wird durch ein Fahrzeug gemäß den Merkmalen des Anspruchs 1 und durch ein Verfahren gemäß den Merkmalen des Anspruchs 14 gelöst.

Die vorliegende Offenbarung betrifft ein Fahrzeug, insbesondere einen Kastenwagen oder Camper-Van, mit einer Fahrzeugseitenwand, die einen Hauptabschnitt und einen Ausklappabschnitt aufweist. Der Ausklappabschnitt schließt in einem eingeklappten Zustand im Wesentlichen bündig mit dem Hauptabschnitt der Fahrzeugseitenwand ab. Der Ausklappabschnitt ist in einem ausgeklappten Zustand aus dem Hauptabschnitt ausgeklappt und spannt eine Fahrzeuginnenraum-Erweiterung/eine Wohnraum-Erweiterung mit einer seitlichen Umwandung aus einem flexiblen, ganz oder teilweise aufblasbaren textilen Element auf.

Der Ausklappabschnitt kann insbesondere einen unteren Ausklappabschnitt und einen oberen Ausklappabschnitt aufweisen, wobei der untere Ausklappabschnitt als ein Boden/ Bodenabschnitt der Fahrzeuginnenraum-Erweiterung und der obere Ausklappabschnitt als ein Deckenabschnitt der Fahrzeuginnenraum-Erweiterung aus der Fahrzeugseitenwand ausklappbar sein kann.

Der Ausklappabschnitt kann alternativ auch an nur einer Seite schwenk- oder klappbar mit dem Hauptabschnitt verbunden sein und somit lediglich um eine Klappachse aus der Fahrzeugseitenwand klappen. Beispielsweise kann der Ausklappabschnitt im ausgeklappten Zustand eine keilförmige Fahrzeuginnenraum-Erweiterung ausbilden. In anderen Worten kann die seitliche Umwandung der ausgeklappten Fahrzeuginnenraum-Erweiterung zumindest abschnittsweise eine näherungsweise dreieckige Grundform aufweisen. Ferner kann der Ausklappabschnitt um eine Klappachse oder eine Dreh- oder Schwenkachse ausklappbar sein, die sich in Fahrzeughöhenrichtung erstreckt.

In anderen Worten ist der Fahrzeuginnenraum durch die Fahrzeuginnenraum-Erweiterung erweiterbar, die im ausgeklappten Zustand aus der Fahrzeugseitenwand hervorsteht. Dafür hat die Fahrzeugseitenwand den Hauptabschnitt, der unbeweglich ist, und den Ausklappabschnitt oder ausklappbaren Seitenwandabschnitt, der aus dem Hauptabschnitt ausklappbar ist. Beim Wechsel von dem eingeklappten zu dem ausgeklappten Zustand kann das aufblasbare textile Element / ein aufblasbares doppelwandiges Textil der seitlichen Umwandung mit einem Fluid aufgeblasen oder aufgepumpt werden. D.h. das Aufblasen der seitlichen Umwandung betätigt in bevorzugter Weise den Ausklappabschnitt.

Im ausgeklappten Zustand kann der untere Ausklappabschnitt der Boden und der obere Ausklappabschnitt die Decke der Fahrzeuginnenraum-Erweiterung ausbilden. Unter einer Fahrzeugseitenwand ist bevorzugt eine Wand des Fahrzeugs (an der rechten oder linken Seite) zu verstehen, welche sich im Wesentlichen in Fahrzeuglängsrichtung und Fahrzeughöhenrichtung erstreckt. Die Fahrzeugseitenwand kann alternativ auch eine Wand am Heck des Fahrzeugs sein, welche sich im Wesentlichen in Fahrzeugbreitenrichtung und Fahrzeughöhenrichtung erstreckt.

Die Fahrzeuginnenraum-Erweiterung kann dabei jedes ausfahr- bzw. ausklappbare Element sein, das den Innenraum des Fahrzeugs und insbesondere einen Wohn- oder Aufenthaltsraum im Fahrzeug erweitert oder vergrößert. Die Fahrzeuginnenraum-Erweiterung kann dabei insbesondere quer und besonders bevorzugt senkrecht aus der Fahrzeugseitenwand hervorstehen. Die Fahrzeuginnenraum-Erweiterung kann insbesondere dann ausgeklappt werden, wenn das Fahrzeug steht und nicht fährt.

Die beiden Ausklappabschnitte können jeweils klappbar an dem Hauptabschnitt angeordnet oder angelenkt sein. Dabei kann eine Klappachse der beiden Ausklappabschnitte jeweils in Längsrichtung des Fahrzeugs ausgerichtet sein, sodass die beiden Ausklappabschnitte jeweils quer zu der Längsrichtung klappbar sind. Die beiden Ausklappabschnitte können derart nebeneinander angeordnet sein, dass die beiden Ausklappabschnitte im eingeklappten Zustand zumindest an einer Seite aneinander anliegen. Die jeweiligen Klappachsen können an der Seite der Ausklappabschnitte angeordnet sein, die der Berührungsseite gegenüberliegt.

Die beiden Ausklappabschnitte können feste oder starre Platten sein. Die beiden Ausklappabschnitte können an ihren jeweiligen Außenseiten derart verkleidet sein, dass beide Ausklappabschnitte im eingeklappten Zustand wie die Fahrzeugseitenwand aussehen.

In nochmals anderen Worten kann die Offenbarung ein ausklappbares Element für die Fahrzeugseitenwand des Fahrzeuges betreffen. Das ausklappbare Element kann ein starres Oberteil, das klappbar mit der Fahrzeugseitenwand verbunden ist, und ein starres Unterteil aufweisen, das ebenfalls klappbar mit der Fahrzeugseitenwand verbunden ist, die durch ein flexibles, ganz oder teilweise aufblasbares textiles Element verbunden sind. Das aufblasbare textile Element kann das Ober- und Unterteil miteinander verbinden und somit den Fahrzeuginnenraum auch im ausgeklappten Zustand gegenüber der Umgebung abschließen. Das aufblasbare textile Element, das die seitliche Umwandung ausbildet, kann im ausgeklappten Zustand der Fahrzeuginnenraum-Erweiterung eine im Wesentlichen rechteckige Grundform aufweisen.

Das offenbarungsgemäße Fahrzeug hat die folgenden Vorteile: Die Fahrzeuginnenraum-Erweiterung begrenzt im eingeklappten Zustand den Fahrzeuginnenraum nicht oder nur minimal, da die aufblasbare Umwandung platzsparend zusammengefaltet werden kann. Gleichzeitig wird die Fahrzeuginnenraum-Erweiterung durch Aufblasen der aufblasbaren Umwandung betätigt. D.h. der Ausklappabschnitt wird aus dem Hauptabschnitt der Fahrzeugseitenwand ausgeklappt, indem das aufblasbare textile Element der Umwandung aufgeblasen wird. Somit kann ein kostengünstiger und einfacher Betätigungsmechanismus für die Fahrzeuginnenraum-Erweiterung bereitgestellt werden, der auf einen komplizierten und teuren Betätigungsmechanismus mit großem Bauraum verzichten kann. Der untere Ausklappabschnitt kann ferner den Boden für die Fahrzeuginnenraum-Erweiterung ausbilden. Durch die starre Platte kann somit ein stabiler und tragfähiger Boden der Fahrzeuginnenraum-Erweiterung bereitgestellt werden. Insgesamt wird offenbarungsgemäß ein Fahrzeug mit einer robusten, kostengünstigen und tragfähigen Fahrzeuginnenraum-Erweiterung bereitgestellt.

Die Aufgabe der vorliegenden Offenbarung wird ferner durch ein Verfahren zum Ausklappen einer Fahrzeuginnenraum-Erweiterung eines Fahrzeugs gelöst. Dabei wird eine seitliche Umwandung der Fahrzeuginnenraum-Erweiterung mit einem Fluid, insbesondere Druckluft, aufgeblasen oder aufgepumpt. Die seitliche Umwandung ist dabei insbesondere ein flexibles, ganz oder teilweise aufblasbares textiles Element. Gleichzeitig bzw. damit einhergehend wird ein Ausklappabschnitt durch das Aufblasen der seitlichen Umwandung aus einem Hauptabschnitt einer Fahrzeugseitenwand ausgeklappt,

Beim Ausklappen des Ausklappabschnitts aus dem Hauptabschnitt durch Aufblasen der seitlichen Umwandung kann ein unterer Ausklappabschnitt in Schwerkraftrichtung und ein oberer Ausklappabschnitt in entgegengesetzte Richtung ausklappen, d.h. entgegen der Schwerkraftrichtung. Bevorzugt trägt dabei das aufblasbare textile Element zum Heben des oberen Ausklappabschnitts/ des Oberteils bei, das heißt, der obere Ausklappabschnitt wird durch das Aufblasen angehoben.

Bei dem Fluid zum Aufblasen der Umwandung kann es sich insbesondere um Druckluft handeln. Das Fluid kann aufgewärmt werden, bevor es in die Umwandung gepumpt wird, um eine Heizfunktion zu gewährleisten. Die seitliche Umwandung kann aber auch mit anderen Fluiden, beispielsweise Flüssigkeiten, aufgefüllt werden, um eine stabile Wand zu erzeugen.

Das Ausklappverfahren ermöglicht ein schnelles und unkompliziertes Ausklappen der Fahrzeuginnenraum-Erweiterung. Insbesondere wird durch das Aufblasen der seitlichen Umwandung ein kostengünstiger Betätigungsmechanismus für die Fahrzeuginnenraum-Erweiterung bereitgestellt.

Vorzugsweise verbindet die seitliche Umwandung im ausgeklappten Zustand den unteren Ausklappabschnitt und den oberen Ausklappabschnitt miteinander, um die Fahrzeuginnenraum-Erweiterung nach außen abzugrenzen.

Im ausgeklappten Zustand kann die seitliche Umwandung (vollständig) aufgeblasen oder aufgepumpt sein. Bevorzugt entsteht durch das Aufblasen des textilen Elements eine wandartige Struktur. Dadurch kann das aufblasbare textile Element der Umwandung zu einer festen Außenwand für die Fahrzeuginnenraum-Erweiterung werden. D.h. die seitliche Umwandung kann im ausgeklappten Zustand der Fahrzeuginnenraum-Erweiterung zwei Funktionen erfüllen. Zum einen kann die aufgeblasene Umwandung die beiden Ausklappabschnitte stabilisieren. Dabei kann die Umwandung insbesondere den oberen Ausklappabschnitt in seiner (horizontalen) Position halten, der sonst durch die Schwerkraft nach unten in Richtung zur Fahrzeugseitenwand hin klappen könnte. Die aufgeblasene Umwandung kann ferner den Fahrzeuginnenraum bzw. den Innenraum der Fahrzeuginnenraum-Erweiterung isolieren. Das Fluid in der aufgeblasenen Umwandung im ausgeklappten Zustand kann eine isolierende Wirkung gegenüber der Umwelt / Außenwelt haben. Wenn Luft als Fluid verwendet wird, hält die geringe Wärmeleitfähigkeit von Luft den Innenraum warm.

Nach einem optionalen, vorteilhaften Aspekt der vorliegenden Offenbarung sind der obere Ausklappabschnitt und der untere Ausklappabschnitt im ausgeklappten Zustand der Fahrzeuginnenraum-Erweiterung jeweils senkrecht zur Fahrzeugseitenwand ausgerichtet. D.h. wenn das Fahrzeug gerade oder aufrecht steht, sind die Ausklappabschnitte vorzugsweise horizontal ausgerichtet. Der obere Ausklappabschnitt und der untere Ausklappabschnitt können im ausgeklappten Zustand also parallel zueinander ausgerichtet sein. Die seitliche Umwandung kann den oberen Ausklappabschnitt und den unteren Ausklappabschnitt miteinander verbinden. Somit kann die seitliche Umwandung in die vertikale Richtung ausgerichtet sein.

Nach einem weiteren optionalen, vorteilhaften Aspekt der vorliegenden Offenbarung weist die seitliche Umwandung drei Seitenwände auf, wobei eine erste Seitenwand und eine zweite Seitenwand im Wesentlichen senkrecht zu der Fahrzeugseitenwand und eine dritte Seitenwand im Wesentlichen parallel zu der Fahrzeugseitenwand angeordnet sind, wobei die dritte Seitenwand die erste Seitenwand und die zweite Seitenwand miteinander verbindet.

Vorzugsweise kann eine Höhe der Fahrzeuginnenraum-Erweiterung größer / höher als die halbe Höhe der Fahrzeugseitenwand sein. Insbesondere kann sich die Fahrzeuginnenraum-Erweiterung über mehr als 60%, bevorzugt mehr als 70%, besonders bevorzugt mehr als 80% der gesamten Höhe der Fahrzeugseitenwand oder auch im Wesentlichen über die gesamte Höhe der Fahrzeugseitenwand erstrecken. Durch die Fahrzeuginnenraum-Erweiterung kann insbesondere ein Essbereich im Fahrzeuginneren oder Innenraum des Wohnmobils erweitert werden. Somit kann ein Esstisch ausgezogen werden oder eine Sitzbank vergrößert werden. Eine hohe Fahrzeuginnenraum-Erweiterung kann ein großes Volumen aufweisen und dadurch den Fahrzeuginnenraum großzügig erweitern.

Wenn die Fahrzeuginnenraum-Erweiterung sich im Wesentlichen über die gesamte Höhe der Fahrzeugseitenwand erstreckt, dann kann insbesondere die Höhe der Fahrzeuginnenraum-Erweiterung größer sein als die Breite. D.h. die Höhe der seitlichen Umwandung kann größer sein als die Erstreckung der Ausklappabschnitte in Fahrzeuglängsrichtung.

Nach einem weiteren optionalen, vorteilhaften Aspekt der vorliegenden Offenbarung ist eine Höhe der Fahrzeuginnenraum-Erweiterung kleiner als die halbe Höhe der Fahrzeugseitenwand. Dadurch kann eine kleinere Fahrzeuginnenraum-Erweiterung bereitgestellt werden. Bei der kleineren Fahrzeuginnenraum-Erweiterung kann eine Höhe der seitlichen Umwandung kleiner als die Erstreckung der Ausklappabschnitte in Fahrzeuglängsrichtung sein. Dadurch können die Ausklappabschnitte weniger weit aus der Fahrzeugseitenwand hervorstehen, als sich die Klappachsen der Ausklappabschnitte entlang des Hauptabschnitts erstrecken. Das Verhältnis von vorstehenden Elementen zu sichernden Elementen kann also optimiert werden. Das kann die Stabilität der ausgeklappten Ausklappabschnitte erhöhen.

Vorzugsweise erweitert die Fahrzeuginnenraum-Erweiterung einen Schlafraum des Fahrzeugs und ist insbesondere ausklappbar, um ein Bett des Fahrzeugs zu verlängern. Herkömmliche Betten können 2 m lang sein. Die Breite von Fahrzeugen kann aber geringer als 2 m sein, damit das Fahrzeug eine Straßenzulassung bekommt. Daher kann es bei bekannten Lösungen schwierig oder unmöglich sein, das Bett im Fahrzeuginneren quer bzw. senkrecht zur Fahrzeuglängserstreckung / Fahrtrichtung anzuordnen. Daher sind die Betten oft längs zur Fahrtrichtung ausgerichtet, was viel Platz im Fahrzeuginneren wegnimmt. Durch die Fahrzeuginnenraum-Erweiterung im Schlafbereich können die Betten quer zur Fahrtrichtung angeordnet werden. Damit wird insbesondere in einem Mittelteil des Fahrzeugs hinter den Vordersitzen Platz eingespart, der für eine Kochnische, eine Sitzgelegenheit oder als sonstiger Aufenthaltsraum genutzt werden kann.

Nach einem weiteren optionalen, vorteilhaften Aspekt der vorliegenden Offenbarung sind der untere Ausklappabschnitt und der obere Ausklappabschnitt miteinander über einen Kopplungsmechanismus, insbesondere über einen Seilzug, gekoppelt, sodass einer der beiden Ausklappabschnitte, der in Schwerkraftrichtung betätigt ist, den anderen der beiden Ausklappabschnitte entgegen der Schwerkraftrichtung betätigt. Beim Ausklappen des Ausklappabschnitts kann der untere Ausklappabschnitt nach unten in Schwerkraftrichtung klappen. D.h. der untere Ausklappabschnitt kann nur sehr wenig oder keine externe Unterstützung benötigen, um in die gewünschte Richtung bewegt zu werden/ zu klappen. Der obere Ausklappabschnitt dagegen kann entgegen der Schwerkraftrichtung angehoben werden/ nach oben klappen. Somit kann der obere Ausklappabschnitt externe Unterstützung benötigen. Indem die beiden Ausklappabschnitte miteinander gekoppelt werden, kann der Ausklappabschnitt, der in Schwerkraftrichtung bewegt wird, den anderen Ausklappabschnitt unterstützen. Der Kopplungsmechanismus kann beispielsweise ein Seilzug sein, wobei ein Ende eines Seiles jeweils an einem Ausklappabschnitt befestigt ist. Das Seil kann über eine oder mehrere (Umlenk-)Rollen umgelenkt werden. Wird ein Ausklappabschnitt in Schwerkraftrichtung betätigt, kann der Ausklappabschnitt das Seil mitziehen, das wiederum den anderen Ausklappabschnitt mitziehen und somit betätigen kann.

In anderen Worten sind bevorzugt der obere Ausklappabschnitt/ das Oberteil und der untere Ausklappabschnitt/ das Unterteil mit einem Mechanismus derart miteinander verbunden, dass ein Aus- oder Einklappen eines Abschnitts / Teils den anderen Abschnitt/ das andere Teil aus- oder einklappen lässt. Beispielsweise können die Gewichtskräfte gekoppelt sein. Etwa kann das Unterteil beim Ausklappen das Oberteil mitführen und kann das Oberteil beim Einklappen das Unterteil mitführen. Es ist offenbarungsgemäß jedoch nicht zwingend ein Unterstützungsmechanismus des Ein- und Ausklappens erforderlich. Insbesondere kann das Ausklappen lediglich durch das Aufblasen des textilen Elements erfolgen und kann das Einklappen lediglich durch Herauslassen des Fluids/ der Luft aus dem textilen Element erfolgen.

Beim Einklappen der beiden Ausklappabschnitte kann der obere Ausklappabschnitt in Richtung der Schwerkraft betätigt werden. Durch den Kopplungsmechanismus kann der obere Ausklappabschnitt den unteren Ausklappabschnitt nach oben in Richtung zur Fahrzeugseitenwand ziehen und so den Einklappvorgang des unteren Ausklappabschnitts unterstützen.

Es sind offenbarungsgemäß auch andere Unterstützungen/ Unterstützungsvorrichtungen des Aus- und Einklappvorgangs denkbar, beispielsweise Schienen, Scheren/ eine Scheren-Mechanik, Teleskopstangen oder Leinen. Auch ist ein mehrstufiges, beispielsweise zweistufiges Aus- und Einfahren denkbar.

In vorteilhafter Weise weisen der untere Ausklappabschnitt und der obere Ausklappabschnitt identische rechteckige Außenabmessungen auf. In anderen Worten sind der obere Ausklappabschnitt und der untere Ausklappabschnitt bevorzugt gemäß einer horizontalen Linie (in bevorzugt zwei gleich große Abschnitte) unterteilt. Bevorzugt sind der obere Ausklappabschnitt und der untere Ausklappabschnitt scharnierartig mit dem Hauptabschnitt der Fahrzeugseitenwand verbunden.

Vorzugsweise hat die Fahrzeuginnenraum-Erweiterung einen Gewichtssensor, der insbesondere in dem unteren Ausklappabschnitt angeordnet ist, der eine Überschreitung eines zulässigen Grenzgewichts detektiert. Sollte der untere Ausklappabschnitt als Boden zu hoch belastet werden, dann kann der Boden im schlimmsten Fall nachgeben und/oder beschädigt werden. Deshalb kann der Ausklappabschnitt den Gewichtssensor aufweisen, der ein Überschreiten einer zulässigen Last erfassen kann. Wird das Überschreiten erfasst, kann ein Alarm ausgelöst werden oder eine Warnung an den Nutzer ausgegeben werden.

Nach einem weiteren optionalen, vorteilhaften Aspekt der vorliegenden Offenbarung ist das Fahrzeug eingerichtet, den ausgeklappten Zustand der Fahrzeuginnenraum-Erweiterung mittels eines Sensors zu detektieren und, insbesondere beim Starten des Fahrzeugs, einen Alarm auszugeben und/oder ein Starten des Fahrzeugs zu verhindern. Wäre die Fahrzeuginnenraum-Erweiterung bei einer Fahrt des Fahrzeugs ausgeklappt, könnte das zu einer Beschädigung an der Fahrzeuginnenraum-Erweiterung oder am Fahrzeug oder zu einer allgemeinen Gefährdung von anderen Verkehrsteilnehmern führen. Daher kann der ausgeklappte Zustand erfasst werden. Der Sensor kann beispielsweise ein Positionssensor an einem der Ausklappabschnitte und/oder ein Drucksensor an der seitlichen Umwandung sein.

Vorzugsweise weist der obere Ausklappabschnitt ein Fenster auf/ ist in dem starren Oberteil ein Fenster verbaut. Durch das Fenster kann Licht in den Fahrzeuginnenraum und in die Fahrzeuginnenraum-Erweiterung fallen. Da das Fenster vorzugsweise im oberen Ausklappabschnitt angeordnet ist, zeigt das Fenster im ausgeklappten Zustand nach oben zur Sonne hin. Somit kann der Lichteinfall vergrößert werden. Das Fenster kann auch einen Sonnenschutz aufweisen oder getönt sein, um direkte Sonneneinstrahlung zu vermeiden. Das Fenster in dem oberen Ausklappabschnitt kann dabei auch ein Seitenfenster sein, das standardmäßig in der Fahrzeugseitenwand angeordnet ist.

Nach einem weiteren optionalen, vorteilhaften Aspekt der vorliegenden Offenbarung ist der untere Ausklappabschnitt im zugeklappten Zustand mit dem oberen Ausklappabschnitt verriegelt. Die beiden Ausklappabschnitte können insbesondere an den Seiten, an denen sie aneinander anliegen und die den Scharnieren gegenüberliegen, miteinander fixiert werden. Dazu können die Ausklappabschnitte eine Verriegelung, wie ein Schloss oder einen Riegel aufweisen. Die Verriegelung kann verhindern, dass der Ausklappabschnitt während der Fahrt oder durch Erschütterung ungewollt ausklappt. Ferner kann die Verriegelung ein Einbruchschutz sein.

Nach einem weiteren optionalen, vorteilhaften Aspekt kann der obere Ausklappabschnitt den unteren Ausklappabschnitt fahrzeugaußenseitig überlappen und kann der obere Ausklappabschnitt an dem Hauptabschnitt der Fahrzeugseitenwand mit einem Verriegelungsmechanismus verriegelt bzw. fixiert sein. Alternativ kann der untere Ausklappabschnitt den oberen Ausklappabschnitt fahrzeugaußenseitig überlappen und kann der untere Ausklappabschnitt an dem Hauptabschnitt der Fahrzeugseitenwand mit einem Verriegelungsmechanismus verriegelt bzw. fixiert sein.

Vorzugsweise weist der untere Ausklappabschnitt Stützen auf, die beim Ausklappen des unteren Ausklappabschnitts zum Boden hin ausklappbar sind und den unteren Ausklappabschnitt zusätzlich abstützen. Die Stützen können insbesondere an der Außenseite bzw. der Unterseite des unteren Ausklappabschnitts klappbar befestigt sein und den unteren Ausklappabschnitt zum Boden hin abstützen. Somit kann eine zulässige Last auf dem Boden der Fahrzeuginnenraum-Erweiterung erhöht werden. Die Stützen können beispielsweise in entsprechende Aussparungen in dem unteren Ausklappabschnitt (klappbar) aufgenommen werden.

Ferner kann der Hauptabschnitt der Fahrzeugseitenwand derart ausgestaltet sein, dass der untere Ausklappabschnitt im ausgeklappten Zustand zumindest teilweise auf einem Randabschnitt / Seitenwandabschluss des Hauptabschnitts aufliegt. D.h. das Scharnier des unteren Ausklappabschnitts kann relativ zur Fahrzeugseitenwand/ zu dem Randabschnitt nach innen zur Fahrzeugmitte hin versetzt sein. Wenn der untere Ausklappabschnitt dann nach außen ausklappt, liegt zumindest ein Teil des Ausklappabschnitts auf dem Randabschnitt auf. Dadurch kann der untere Ausklappabschnitt von dem Randabschnitt abgestützt werden. Dadurch kann die zulässige Last des unteren Ausklappabschnitts erhöht werden.

Vorzugsweise sind der untere Ausklappabschnitt und der obere Ausklappabschnitt jeweils mit Scharnieren klappbar an der Fahrzeugseitenwand angebracht. Die Scharniere können vorzugsweise derart ausgestaltet sein, dass die Ausklappabschnitte lediglich nach außen klappen können. Die Scharniere können den Ausklappvorgang auch dahingehend begrenzen, dass die Ausklappabschnitte nicht weiter als in eine horizontale Stellung klappen oder verschwenken können. Die horizontale Stellung kann dabei die Stellung sein, in der beide Ausklappabschnitte senkrecht aus der Fahrzeugseitenwand vorstehen. Die Scharniere können die Ausklappabschnitte zusätzlich in der horizontalen Stellung stützen, um die zulässige Last auf den Ausklappabschnitten zu erhöhen.

Vorzugsweise ist das aufblasbare textile Element als OPW (one-piece woven) - Gewebe hergestellt.

Das aufblasbare textile Element kann ferner fluiddicht beschichtet werden.

Durch das Herstellverfahren OPW können besonders robuste Textilien hergestellt werden. Textile OPW-Gewebe werden beispielsweise auf Webanlagen als "Endlos-Textilbahn" gewebt, wobei bei diesem Webvorgang Hohlkammern und Web-, Trenn- oder Verbindungsfahnen ausgebildet werden. Diese Endlos-Webbahn bildet dann sozusagen eine Abwicklung einer Raumstruktur aus und kann dann nach einer Verbindung der außenliegenden Verbindungsfahnen der Hohlkammersegmente, beispielsweise durch stoffschlüssige Verbindung oder Vernähen oder dergleichen zur Raumstruktur gefaltet werden, wobei die Stabilität dann durch das Aufblasen der Hohlkammersegmente erzeugt wird.

Somit kann beim Aufblasen des textilen Elements eine feste und stabile (Außen-) Wand gebildet werden. Das textile Element kann im aufgeblasenen Zustand sogar derart robust sein, dass sich ein erwachsener Mensch auf das aufgeblasene textile Element stellen kann, ohne dass das textile Element nachgibt, beschädigt wird oder reißt.

Nach einem weiteren optionalen, vorteilhaften Aspekt kann sich der untere Ausklappabschnitt über die gesamte Höhe des Ausklappabschnitts erstrecken und kann im ausgeklappten Zustand der Fahrzeuginnenraum-Erweiterung den Bodenabschnitt ausbilden. Die seitliche Umwandung kann dabei die übrigen Seitenwände der Fahrzeuginnenraum-Erweiterung ausbilden.

Nach einem weiteren optionalen, vorteilhaften Aspekt kann sich der obere Ausklappabschnitt über die gesamte Höhe des Ausklappabschnitts erstrecken und im ausgeklappten Zustand der Fahrzeuginnenraum-Erweiterung den Deckenabschnitt ausbilden. Die seitliche Umwandung kann dabei die übrigen Seitenwände der Fahrzeuginnenraum-Erweiterung ausbilden.

Wenn lediglich eine Klappachse bzw. ein Scharnier für die Fahrzeuginnenraum-Erweiterung benötigt wird, kann das die Kosten senken. Ferner kann eine Seitenwand bzw. ein Deckenabschnitt aus dem aufblasbaren Material der seitlichen Umwandung Schnee und/oder Regen besser abfließen lassen.

Nach einem weiteren optionalen, vorteilhaften Aspekt kann der Ausklappabschnitt zwei Ausklappabschnitte aufweisen, die jeweils entlang einer Dreh- oder Klappachse klappbar sind, die in einer Höhenrichtung des Fahrzeugs verläuft. Die zwei Ausklappabschnitte können im ausgeklappten Zustand der Fahrzeuginnenraum-Erweiterung die Seitenwände der Fahrzeuginnenraum-Erweiterung ausbilden. Die seitliche Umwandung der Fahrzeuginnenraum-Erweiterung kann in diesem Fall den Bodenabschnitt, den Deckenabschnitt und den Frontabschnitt/ die Frontwand der Fahrzeuginnenraum-Erweiterung ausbilden.

Nach einem weiteren optionalen, vorteilhaften Aspekt kann der Ausklappabschnitt beim Ausklappen aus dem Hauptabschnitt gleichzeitig ausklappen und ausfahren. Dadurch kann der Ausklappabschnitt im ausgeklappten Zustand der Fahrzeuginnenraum-Erweiterung von dem Hauptabschnitt beabstandet sein. In anderen Worten ausgedrückt kann der Ausklappabschnitt derart aus dem Hauptabschnitt ausklappbar oder ausschwenkbar sein, dass der Ausklappabschnitt im ausgeklappten / ausgeschwenkten Zustand sowohl angewinkelt aus dem Hauptabschnitt vorsteht, als auch von dem Hauptabschnitt beabstandet ist. D.h. im ausgeklappten Zustand kann jede Seite des Ausklappabschnitts von der seitlichen Umwandung umgeben sein. Die seitliche Umwandung kann dabei derart ausgestaltet sein, dass sie beim Aufblasen den Ausklappabschnitt zuerst senkrecht zur Fahrzeugseitenwand aus dem Hauptabschnitt herausschiebt und anschließend ausklappt. Der Ausklappabschnitt kann im ausgeklappten Zustand schräg zur Fahrzeugseitenwand ausgerichtet sein. Dadurch kann insbesondere das Volumen der Fahrzeuginnenraum-Erweiterung vergrößert werden. Das gleichzeigte Ausklappen und Ausschieben kann ferner durch ein geeignetes (schwenkbares) Gelenk zwischen dem Hauptabschnitt und dem Ausklappabschnitt realisiert bzw. unterstützt werden.

### Kurzbeschreibung der Figuren

Die vorliegende Offenbarung wird im Folgenden detailliert anhand von bevorzugten Ausführungsbeispielen und beigefügten Figuren erklärt.
- Fig. 1a: zeigt eine perspektivische Darstellung eines Fahrzeugs gemäß einer ersten Ausführungsform der vorliegenden Offenbarung mit einem Ausklappabschnitt in einem eingeklappten Zustand;
- Fig. 1b: zeigt eine perspektivische Darstellung eines Fahrzeugs gemäß der ersten Ausführungsform der vorliegenden Offenbarung mit dem Ausklappabschnitt in einem teilweise ausgeklappten Zustand;
- Fig. 1c: zeigt eine perspektivische Darstellung eines Fahrzeugs gemäß der ersten Ausführungsform der vorliegenden Offenbarung mit dem Ausklappabschnitt in einem ausgeklappten Zustand;
- Fig. 2a: zeigt eine perspektivische Darstellung eines Fahrzeugs gemäß einer zweiten Ausführungsform der vorliegenden Offenbarung mit einem Ausklappabschnitt in einem eingeklappten Zustand;
- Fig. 2b: zeigt eine perspektivische Darstellung eines Fahrzeugs gemäß der zweiten Ausführungsform der vorliegenden Offenbarung mit dem Ausklappabschnitt in einem teilweise ausgeklappten Zustand;
- Fig. 2c: zeigt eine perspektivische Darstellung eines Fahrzeugs gemäß der zweiten Ausführungsform der vorliegenden Offenbarung mit dem Ausklappabschnitt in einem ausgeklappten Zustand;
- Fig. 3: zeigt einen Querschnitt durch eine Fahrzeuginnenraum-Erweiterung des Fahrzeugs gemäß einer Ausführungsform der vorliegenden Offenbarung;
- Fig. 4: zeigt einen Querschnitt durch eine Fahrzeuginnenraum-Erweiterung des Fahrzeugs gemäß einer weiteren Ausführungsform der vorliegenden Offenbarung;
- Fig. 5: zeigt einen Querschnitt durch eine Fahrzeuginnenraum-Erweiterung des Fahrzeugs gemäß einer weiteren Ausführungsform der vorliegenden Offenbarung;

- Fig. 6: zeigt einen Querschnitt durch eine Fahrzeuginnenraum-Erweiterung des Fahrzeugs gemäß einer weiteren Ausführungsform der vorliegenden Offenbarung;
- Fig. 7: zeigt einen Querschnitt durch eine Fahrzeuginnenraum-Erweiterung des Fahrzeugs gemäß einer weiteren Ausführungsform der vorliegenden Offenbarung;
- Fig. 8: zeigt eine perspektivische Darstellung einer Fahrzeuginnenraum-Erweiterung des Fahrzeugs gemäß einer weiteren Ausführungsform der vorliegenden Offenbarung;
- Fig. 9: zeigt eine perspektivische Darstellung einer Fahrzeuginnenraum-Erweiterung des Fahrzeugs gemäß einer weiteren Ausführungsform der vorliegenden Offenbarung;
- Fig. 10: zeigt eine perspektivische Darstellung einer Fahrzeuginnenraum-Erweiterung des Fahrzeugs gemäß einer weiteren Ausführungsform der vorliegenden Offenbarung;
- Fig. 11: zeigt eine perspektivische Darstellung einer Fahrzeuginnenraum-Erweiterung des Fahrzeugs gemäß einer weiteren Ausführungsform der vorliegenden Offenbarung;
- Fig. 12: zeigt eine perspektivische Darstellung einer Fahrzeuginnenraum-Erweiterung des Fahrzeugs gemäß einer weiteren Ausführungsform der vorliegenden Offenbarung;
- Fig. 13: zeigt eine perspektivische Darstellung einer Fahrzeuginnenraum-Erweiterung des Fahrzeugs gemäß einer weiteren Ausführungsform der vorliegenden Offenbarung;
- Fig. 14: zeigt eine perspektivische Darstellung einer Fahrzeuginnenraum-Erweiterung des Fahrzeugs gemäß einer weiteren Ausführungsform der vorliegenden Offenbarung; und
- Fig. 15: zeigt eine perspektivische Darstellung einer Fahrzeuginnenraum-Erweiterung des Fahrzeugs gemäß einer weiteren Ausführungsform der vorliegenden Offenbarung.

Die Figuren sind dabei lediglich schematischer Natur und dienen dazu, das Verständnis der Offenbarung zu verbessern. Alle Merkmale von verschiedenen Ausführungsformen können untereinander ausgetauscht werden.

### Detaillierte Beschreibung der Figuren

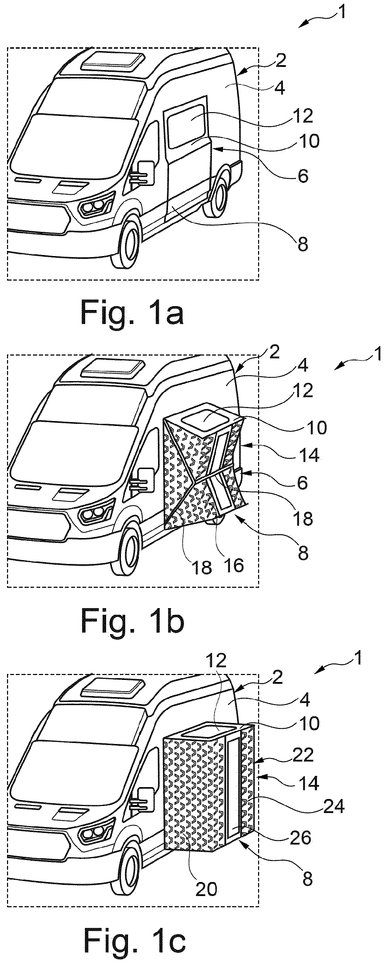

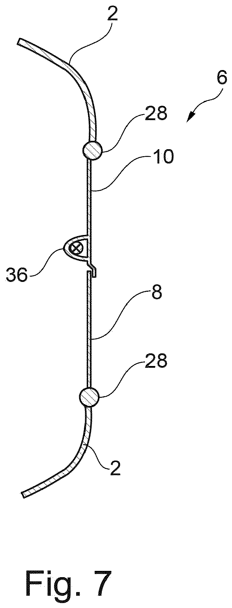

Fig. 1a zeigt ein Fahrzeug 1 gemäß einer ersten Ausführungsform. Das Fahrzeug 1 ist beispielsweise ein Kastenwagen, ein Wohnmobil oder ein Camper-Van oder ein ähnliches Fahrzeug, das dafür geeignet ist, dass Menschen darin wohnen oder schlafen. Das Fahrzeug 1 hat eine Fahrzeugseitenwand 2 mit einem Hauptabschnitt 4 und einem Ausklappabschnitt 6. In einem eingeklappten Zustand, der in Fig. 1a gezeigt ist, schließt der Ausklappabschnitt 6 im Wesentlichen bündig mit dem Hauptabschnitt 4 der Fahrzeugseitenwand 2 ab. D.h. der Hauptabschnitt 4 und der Ausklappabschnitt 6 bilden eine im Wesentlichen durchgängige Fahrzeugseitenwand 2 aus. Dabei kann der Ausklappabschnitt 6 insbesondere derart in die Fahrzeugseitenwand 2 integriert sein, dass nur ein minimaler Luftwiderstand durch mögliche Vorsprünge oder Unregelmäßigkeiten erzeugt wird. Der Ausklappabschnitt 6 hat einen unteren Ausklappabschnitt 8 und einen oberen Ausklappabschnitt 10, die jeweils klapp- oder kippbar mit dem Hauptabschnitt 4 der Fahrzeugseitenwand 2 verbunden sind. Der untere Ausklappabschnitt 8 ist dabei nach unten in Richtung der Schwerkraft zum Boden hin klappbar befestigt. Der obere Ausklappabschnitt 10 ist nach oben entgegen der Richtung der Schwerkraft zu einem Fahrzeugdach hin klappbar befestigt. Die jeweiligen Klappachsen oder Scharniere 28 (in Fig.7b gezeigt) erstrecken sich dabei in einer Längs- oder Fahrtrichtung des Fahrzeugs. Die beiden Ausklappabschnitte 8, 10 sind derart nebeneinander angeordnet, dass sie im eingeklappten Zustand an einer Seite aneinander anliegen. Die anliegende Seite liegt dabei den Scharnieren 28 gegenüber. In dem oberen Ausklappabschnitt 10 ist ein Fenster 12 angeordnet. Der Ausklappabschnitt 6 gemäß der ersten Ausführungsform ist in Fahrtrichtung gesehen hinter der Fahrerkabine oder hinter den vorderen Türen des Fahrzeugs 1 angeordnet.

Fig. 1b zeigt das Fahrzeug 1, wobei der Ausklappabschnitt 6 in einem teilweise ausgeklappten Zustand ist. Der untere Ausklappabschnitt 8 ist dabei zumindest teilweise nach außen zum Boden hin und der obere Ausklappabschnitt 10 zumindest teilweise nach außen in Richtung des Fahrzeugdachs geklappt. Der Ausklappabschnitt 6 spannt zumindest teilweise eine Fahrzeuginnenraum-Erweiterung 14 auf. Die Fahrzeuginnenraum-Erweiterung 14 weist eine seitliche Umwandung 16 auf, die mit den beiden Ausklappabschnitten 8, 10 aus der Fahrzeugseitenwand 2 klappt. Die Umwandung 16 besteht aus einem aufblasbaren textilen Element, das insbesondere doppelwandig ausgeführt sein kann. Im eingeklappten Zustand ist die Umwandung 16 luftleer bzw. nicht aufgeblasen und ist innerhalb der beiden Ausklappabschnitte 8, 10 gefaltet. So benötigt die Umwandung 16 nur wenig Platz / Raum im eingeklappten Zustand. In Fig. 1b ist eine Falt- oder Klappkante 18 gezeigt, entlang der die Umwandung 16 eingefaltet wird. Ein Abschnitt der Falt- oder Klappkante 18 verläuft dabei horizontal bzw. in Fahrzeuglängsrichtung. Der horizontale Abschnitt teilt die Fahrzeuginnenraum-Erweiterung 14 in einen oberen und in einen unteren Teil. Ferner hat die Falt- oder Klappkante 18 einen seitlichen Abschnitt, durch den eine Seitenwand der Umwandung 16 eingeklappt oder zusammengefaltet werden kann.

Während des Aus- oder Aufklappvorgangs wird die seitliche Umwandung 16 mit einem Fluid, vorzugsweise Druckluft, aufgeblasen oder aufgepumpt. Dadurch dehnt sich die seitliche Umwandung 16 aus und richtet sich auf. Die seitliche Umwandung 16 klappt dabei den unteren Ausklappabschnitt 8 und den oberen Ausklappabschnitt 10 jeweils in seine Klapprichtung. Damit fungiert die Umwandung 16 als ein Betätigungsmechanismus für die Fahrzeuginnenraum-Erweiterung 14.

Fig. 1c zeigt das Fahrzeug 1 mit dem vollständig oder komplett ausgeklappten Ausklappabschnitt 6. Im ausgeklappten Zustand spannt der Ausklappabschnitt 6 die Fahrzeuginnenraum-Erweiterung 14 mit der seitlichen Umwandung 16 auf. Im ausgeklappten Zustand ist das aufblasbare textile Element der seitlichen Umwandung 16 komplett aufgeblasen oder aufgepumpt und bildet dadurch eine stabile Seiten- oder Außenwand für die Fahrzeuginnenraum-Erweiterung 14. Der untere Ausklappabschnitt 8 bildet im ausgeklappten Zustand einen Boden der Fahrzeuginnenraum-Erweiterung 14. Der obere Ausklappabschnitt bildet einen Deckel oder Deckelabschnitt der Fahrzeuginnenraum-Erweiterung 14. Die Umwandung bildet zumindest abschnittsweise eine Außenwand der Fahrzeuginnenraum-Erweiterung 14 und die Fahrzeuginnenraum-Erweiterung 14 spannt im Wesentlichen einen Quader auf. Die Fahrzeuginnenraum-Erweiterung 14 weist dabei zumindest drei Seitenwände auf, die einen Innenraum der Fahrzeuginnenraum-Erweiterung 14 gegenüber der Umwelt oder Außenumgebung abgrenzen. Eine erste Seitenwand 20 und eine zweite Seitenwand 22 sind dabei parallel zueinander angeordnet und stehen dabei senkrecht aus der Fahrzeugseitenwand 2 hervor. Die erste Seitenwand 20 und die zweite Seitenwand 22 erstrecken sich in vertikale Richtung bzw. in Höhenrichtung des Fahrzeugs und verbinden den unteren Ausklappabschnitt 8 und den oberen Ausklappabschnitt 10 miteinander. Eine dritte Seitenwand 24 verbindet die erste Seitenwand 20 und die zweite Seitenwand 22 miteinander. Die dritte Seitenwand 24 ist dabei im Wesentlichen parallel zu der Fahrzeugseitenwand 2 ausgerichtet. Alle drei Seitenwände 20, 22, 24 verbinden den unteren Ausklappabschnitt 8 und den oberen Ausklappabschnitt 10 miteinander und spannen so die quaderförmige Fahrzeuginnenraum-Erweiterung 14 auf. Lediglich eine Außenwand der quaderförmigen Fahrzeuginnenraum-Erweiterung 14 bleibt frei, nämlich die Seite, die zum Fahrzeuginnenraum zeigt.

Die dritte Seitenwand 24 kann ein weiteres Fenster 26 aufweisen, das im Wesentlichen vertikal ausgerichtet ist und sich über die Höhe der dritten Seitenwand 24 erstreckt. Das Fenster 26 kann beim Einklappen der Fahrzeuginnenraum-Erweiterung 14 in der Hälfte zusammenfaltbar sein. Die Fahrzeuginnenraum-Erweiterung 14 erstreckt sich im Wesentlichen über die Höhe der Fahrzeugseitenwand 2 oder zumindest über einen großen Teil der Fahrzeugseitenwand 2. D.h. die Höhe der Fahrzeuginnenraum-Erweiterung 14 ist zumindest größer als die halbe Höhe der Fahrzeugseitenwand 2. Durch die Fahrzeuginnenraum-Erweiterung 14 wird insbesondere ein Essbereich im Fahrzeuginneren oder Innenraum des Wohnmobils erweitert. Somit kann ein Esstisch ausgezogen werden oder eine Sitzbank vergrößert werden. Der untere Ausklappabschnitt 8 kann zusätzlich mit (ausklappbaren) Stützen unterstützt werden.

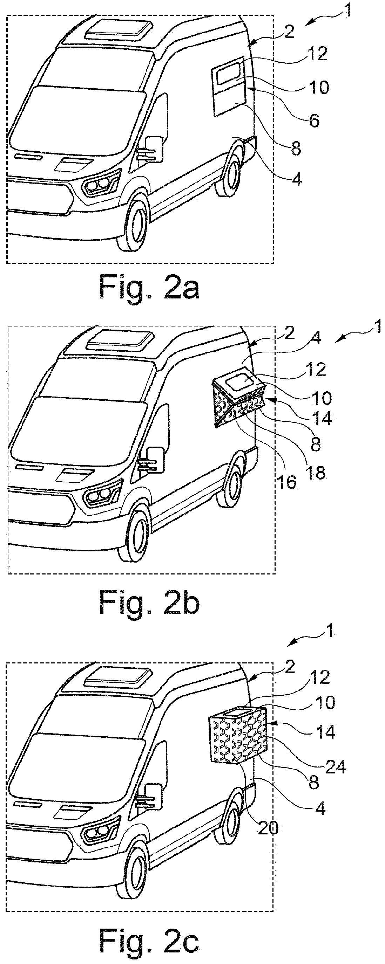

Fig. 2a zeigt einen eingeklappten Ausklappabschnitt 6 gemäß einer weiteren Ausführungsform. Der Ausklappabschnitt 6 ist in einem in Fahrtrichtung des Fahrzeugs 1 gesehen hinteren Bereich der Fahrzeugseitenwand 2 angeordnet. Der Ausklappabschnitt 6 weist ebenfalls den unteren Ausklappabschnitt 8 und den oberen Ausklappabschnitt 10 auf, die nach außen klappbar mit dem Hauptabschnitt 4 der Fahrzeugseitenwand 2 verbunden sind. Der obere Ausklappabschnitt 10 hat ein Fenster 12.

Fig. 2b zeigt das Fahrzeug 1 mit einem teilweise ausgeklappten Ausklappabschnitt 6. Das Aus- oder Aufklappen des Ausklappabschnitts 6 bzw. der Fahrzeuginnenraum-Erweiterung 14 läuft genauso ab, wie es vorstehend in der ersten Ausführungsform beschrieben wurde. Der untere Ausklappabschnitt 8 und der obere Ausklappabschnitt 10 werden jeweils durch das Aufblasen der seitlichen Umwandung 16 nach außen aufgeklappt. Die seitliche Umwandung ist im eingeklappten Zustand zwischen dem Ausklappabschnitt 6 und der Fahrzeugseitenwand 2 zusammengefaltet und klappt entlang der Falt- oder Klappkante 18 auf.

Fig. 2c zeigt das Fahrzeug 1, wobei der Ausklappabschnitt 6 komplett oder vollständig ausgeklappt ist. Durch den vollständig ausgeklappten Ausklappabschnitt 6 wird die Fahrzeuginnenraum-Erweiterung 14 aufgespannt. Die Fahrzeuginnenraum-Erweiterung 14 hat die seitliche Umwandung 16 mit den drei Seitenwänden 20, 22, 24, die aus der Fahrzeugseitenwand 2 hervorstehen. Die drei Seitenwände 20, 22, 24 verbinden den unteren Ausklappabschnitt 8 und den oberen Ausklappabschnitt 10 miteinander und bilden im aufgeblasenen Zustand die festen Außenwände der Fahrzeuginnenraum-Erweiterung 14. Die Fahrzeuginnenraum-Erweiterung 14 ist im hinteren Abschnitt der Fahrzeugseitenwand 2 angeordnet. Auf dieser Höhe ist im Fahrzeuginnenraum ein Bett oder ein Schlafbereich bereitgestellt. Durch die Fahrzeuginnenraum-Erweiterung 14 kann dieser Schlafbereich im Fahrzeuginneren vergrößert werden.

Herkömmliche Betten sind normalerweise 2 m lang. Die Breite von herkömmlichen Fahrzeugen 1 ist aber geringer als 2 m, damit die Fahrzeuge 1 eine Straßenzulassung bekommen. Daher ist es bei bekannten Lösungen schwierig oder unmöglich, das Bett im Fahrzeuginneren quer bzw. senkrecht zur Fahrzeuglängserstreckung oder Fahrtrichtung des Fahrzeugs 1 anzuordnen. Daher sind die Betten oft längs zur Fahrtrichtung ausgerichtet, was viel Platz im Fahrzeuginneren wegnimmt. Durch die Fahrzeuginnenraum-Erweiterung 14 im Schlafbereich können die Betten quer zur Fahrtrichtung angeordnet werden. Damit wird insbesondere im Mittelteil des Fahrzeugs hinter den Vordersitzen Platz eingespart, der für eine Kochnische, eine Sitzgelegenheit oder als sonstiger Aufenthaltsraum genutzt werden kann.

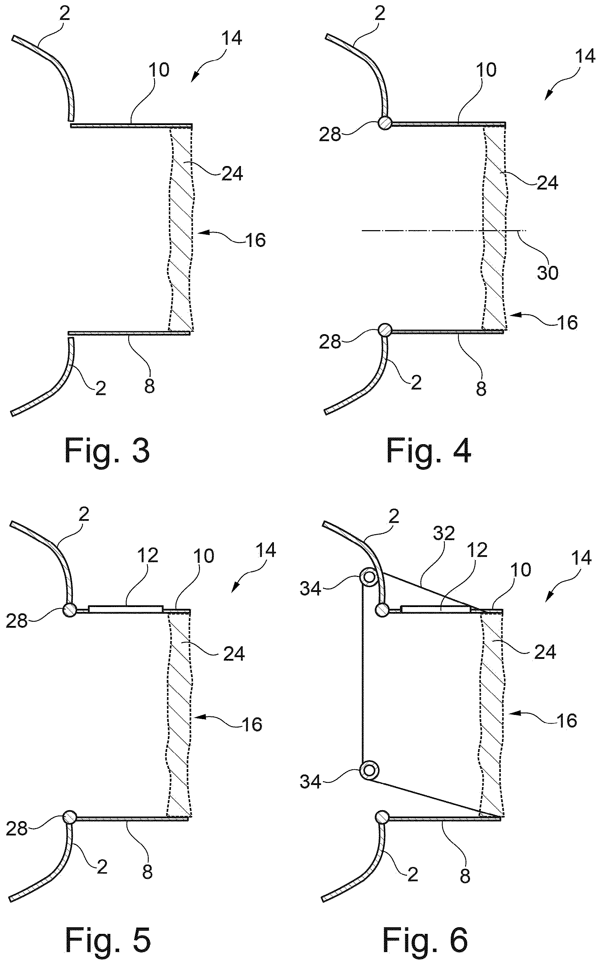

Fig. 3 zeigt eine schematische Darstellung eines Querschnitts durch die Fahrzeuginnenraum-Erweiterung 14 im ausgeklappten Zustand. Der untere Ausklappabschnitt 8 und der obere Ausklappabschnitt 10 sind im Wesentlichen parallel zueinander ausgerichtet, stehen im Wesentlichen senkrecht aus der Fahrzeugseitenwand hervor und sind durch die seitliche Umwandung 16 miteinander verbunden. Konkreter sind der untere Ausklappabschnitt 8 und der obere Ausklappabschnitt 10 in der Schnittansicht durch die dritte Seitenwand 24 der seitlichen Umwandung 16 miteinander verbunden. Die der dritten Seitenwand 24 gegenüberliegende Seite der Fahrzeuginnenraum-Erweiterung 14 ist offen und ermöglicht eine Verbindung der Fahrzeuginnenraum-Erweiterung 14 zum Fahrzeuginnenraum. Die seitliche Umwandung 16 ist doppelwandig ausgeführt und dafür ausgebildet und geeignet, mit Luft befüllt zu werden. Die aufgeblasene seitliche Umwandung 16 stützt die Ausklappabschnitte 8, 10 ab und verhindert ein Einklappen des ausgeklappten Ausklappabschnitts 6. Dabei verhindert die seitliche Umwandung 16 insbesondere, dass der obere Ausklappabschnitt 10 in Schwerkraftrichtung zur Fahrzeugseitenwand 2 hinab klappt.

Fig. 4 zeigt eine schematische Darstellung eines Querschnitts durch die Fahrzeuginnenraum-Erweiterung 14 im ausgeklappten Zustand gemäß einer weiteren Ausführungsform. Der untere Ausklappabschnitt 8 und der obere Ausklappabschnitt 10 sind jeweils mit Scharnieren 28 mit der Fahrzeugseitenwand 2 klappbar verbunden. Die Scharniere 28 sind dabei jeweils derart ausgeführt, dass die beiden Ausklappabschnitte 8, 10 nach außen klappbar sind und in einer horizontalen Ausrichtung blockiert werden, damit die beiden Ausklappabschnitte 8, 10 nicht weiter schwenken als in ihre gewünschte Endposition. Die gewünschte Endposition ist dabei die Stellung, in der die beiden Ausklappabschnitte 8, 10 senkrecht zur Fahrzeugseitenwand 2 vorstehen. Durch eine gestrichelte Linie ist eine horizontale Trennlinie 30 auf halber Höhe der dritten Seitenwand 24 angedeutet. Die horizontale Trennlinie 30 soll verdeutlichen, dass die beiden Ausklappabschnitte 8, 10 gleich weit aus der Fahrzeugseitenwand 2 hervorstehen. Dadurch erstrecken sich die beiden Ausklappabschnitte 8, 10 im eingeklappten Zustand gleich weit entlang der Fahrzeugseitenwand 2. D.h., dass die dritte Seitenwand 24 bzw. die gesamte seitliche Umwandung 16 beim Zusammenklappen der Fahrzeuginnenraum-Erweiterung 14 auf halber Höhe eingefaltet oder zusammengefaltet wird.

Der untere Ausklappabschnitt 8 und der obere Ausklappabschnitt 10 können auch unterschiedlich groß sein. In diesem Fall wäre die dritte Seitenwand 24 nicht im Wesentlichen parallel zur Fahrzeugseitenwand 2 ausgerichtet, sondern wäre schräg ausgerichtet.

Fig. 5 zeigt eine schematische Darstellung eines Querschnitts durch die Fahrzeuginnenraum-Erweiterung 14 im ausgeklappten Zustand gemäß einer weiteren Ausführungsform. Im oberen Ausklappabschnitt 10 ist das Fenster 12 ausgebildet. Im ausgeklappten Zustand zeigt der obere Ausklappabschnitt 10 nach oben. Somit zeigt auch das Fenster 12 im ausgeklappten Zustand nach oben in Richtung der Sonne. Dadurch kann mehr Licht in das Innere der Fahrzeuginnenraum-Erweiterung 14 einfallen. Im eingeklappten Zustand hat das Fenster 12 die Funktion eines Seitenfensters des Fahrzeugs 1. Durch das Fenster 12 kann auch im eingeklappten Zustand des Ausklappabschnitts 6 Licht in das Fahrzeug 1 einfallen.

Das Fenster 12 ist im oberen Ausklappabschnitt 10 angeordnet, da das textile Element der Umwandung 16 lichtdicht ist und das Einbauen eines Fensters in die Umwandung 16 mit erheblichem Aufwand verbunden wäre. Natürlich kann das Fenster 12 auch im unteren Ausklappabschnitt 8 angeordnet sein, was aber bezüglich der Tragfähigkeit der Fahrzeuginnenraum-Erweiterung 14 und der Lichteinfallmenge Nachteile mitbringen würde.

Fig. 6 zeigt einen Querschnitt durch die Fahrzeuginnenraum-Erweiterung 14 mit einem Kopplungsmechanismus zum Ausklappen des Ausklappabschnitts 6. Der untere Ausklappabschnitt 8 und der obere Ausklappabschnitt 10 können miteinander über ein Seil oder ein Kabel 32 verbunden werden. Dabei ist jeweils ein Ende des Seils 32 mit den beiden Ausklappabschnitten 8, 10 verbunden. Das Seil 32 ist über zumindest eine Umlenkrolle 34 geführt. Vorzugsweise ist das Seil 32 über zwei Umlenkrollen 34 geführt. Durch die Kombination aus dem Seil 32 und den Umlenkrollen 34 wird ein Seilzug realisiert. Der Seilzug kann beim Betätigen des Ausklappabschnitts 6 helfen. Wenn der Ausklappabschnitt 6 ausgeklappt wird, klappt der untere Ausklappabschnitt 8 in Schwerkraftrichtung nach unten in Schwerkraftrichtung und wird somit hauptsächlich von der Schwerkraft betätigt. Beim nach unten Klappen zieht der untere Ausklappabschnitt 8 das Seil 32, das an dem untere Ausklappabschnitt 8 befestigt ist, mit nach unten. Die Umlenkrollen 34 lenken das Seil 32 derart um, dass der obere Ausklappabschnitt 10 durch das Seil 32 nach oben entgegen der Schwerkraftrichtung gezogen wird. So wird durch den Seilzug bzw. den Kopplungsmechanismus auch der obere Ausklappabschnitt 10 in gewisser Weise/ indirekt durch die Schwerkraft betätigt.

Beim Einklappen des Ausklappabschnitts 6 klappt der obere Ausklappabschnitt 10 in Schwerkraftrichtung nach unten in Richtung der Fahrzeugseitenwand 2 bzw. wird durch die Schwerkraft betätigt. Der obere Ausklappabschnitt 10 zieht das Seil 32 mit sich nach unten, das an dem oberen Ausklappabschnitt 10 befestigt ist. Durch die Umlenkrollen 34 zieht das Seil 32 den unteren Ausklappabschnitt 8 nach oben entgegen der Schwerkraftrichtung und klappt den unteren Ausklappabschnitt 8 dadurch "automatisch" mit ein. Die Fahrzeuginnenraum-Erweiterung 14 kann natürlich zusätzlich das Fenster 12 in dem oberen Ausklappabschnitt 10 aufweisen.

Fig. 7 zeigt einen Querschnitt des Ausklappabschnitts 6 im eingeklappten Zustand. Der obere Ausklappabschnitt 10 überlappt den unteren Ausklappabschnitt 8 im eingeklappten Zustand zumindest abschnittsweise. Der Ausklappabschnitt 6 weist eine Verriegelung 36 auf, die die beiden Ausklappabschnitte 8, 10, insbesondere den oberen Ausklappabschnitt 10 zu dem Hauptabschnitt 4 der Fahrzeugseitenwand 2 fixiert. So kann beispielsweise während der Fahrt sichergestellt werden, dass der Ausklappabschnitt 6 nicht ungewollt ausklappt. Ferner ist die Verriegelung 36 auch ein Diebstahlschutz, da der Ausklappabschnitt eine potenzielle Schwachstelle für unbefugtes Eindringen in den Fahrzeuginnenraum darstellt.

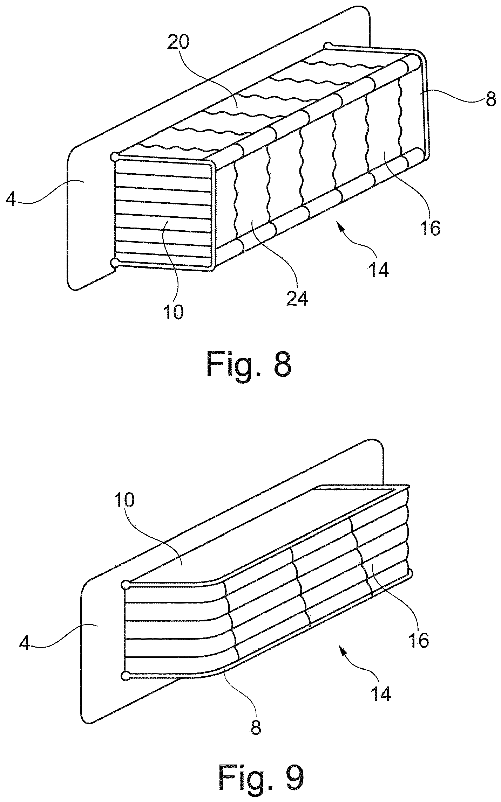

Fig. 8 zeigt eine Fahrzeuginnenraum-Erweiterung 14 gemäß einer weiteren Ausführungsform der vorliegenden Offenbarung. Dabei klappen die beiden Ausklappabschnitte 8, 10 nicht nach oben bzw. unten sondern seitlich aus dem Hauptabschnitt 4 aus. D.h. die jeweiligen Ausklappachsen erstrecken sich vertikal oder in Fahrzeughöhenrichtung und nicht in Fahrzeuglängsrichtung/Fahrtrichtung des Fahrzeugs. Die Seitenwände der seitlichen Umwandung erstrecken sich somit in Fahrzeuglängsrichtung.

Fig. 9 zeigt die Fahrzeuginnenraum-Erweiterung 14 gemäß einer weiteren Ausführungsform der vorliegenden Offenbarung. Die beiden Ausklappabschnitte 8, 10 klappen jeweils nach oben oder nach unten aus dem Hauptabschnitt 4 aus. Die Fahrzeuginnenraum-Erweiterung 14 ist dabei nicht quaderförmig ausgebildet, sondern hat runde Kanten. Die seitliche Umwandung 16 weist also runde Kanten zwischen den einzelnen Seitenwänden auf.

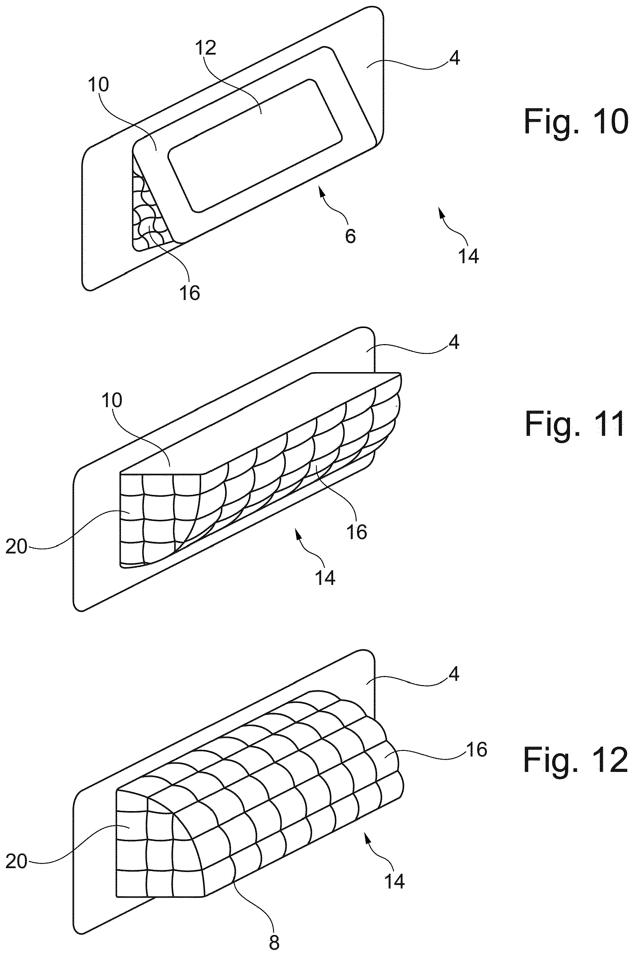

Fig. 10 zeigt die Fahrzeuginnenraum-Erweiterung 14, wobei sich der obere Ausklappabschnitt 10 über die gesamte Höhe des Ausklappabschnitts 6 erstreckt. In anderen Worten ist nur der obere Ausklappabschnitt 10 und somit kein unterer Ausklappabschnitt vorgesehen. Somit klappt der obere Ausklappabschnitt 10 nach oben entgegen der Schwerkraftrichtung auf. Die Fahrzeuginnenraum-Erweiterung 14 kann dabei lediglich teilweise ausgeklappt werden, sodass der obere Ausklappabschnitt 10 schräg zur Fahrzeugseitenwand 2 ausgerichtet ist. Der obere Ausklappabschnitt 10 kann auch senkrecht aus dem Hauptabschnitt 4 hervorstehen, wie in Fig. 11 gezeigt ist. Der obere Ausklappabschnitt 10 kann das Fenster 12 aufweisen, das durch die Größe des oberen Ausklappabschnitts 10 relativ groß ausgeführt werden kann.

Fig. 12 zeigt die Fahrzeuginnenraum-Erweiterung 14, wobei sich der untere Ausklappabschnitt 8 über die gesamte Höhe des Ausklappabschnitts 6 erstreckt. In anderen Worten ist nur der untere Ausklappabschnitt 8 und somit kein oberer Ausklappabschnitt vorgesehen. Der untere Ausklappabschnitt 8 klappt nach unten in Schwerkraftrichtung aus dem Hauptabschnitt 4 heraus und bildet den Boden der Fahrzeuginnenraum-Erweiterung 14. Die seitliche Umwandung 16 erstreckt sich zwischen dem Hauptabschnitt 4 und dem unteren Ausklappabschnitt 8. Durch die Ausgestaltung der seitlichen Umwandung 16 kann Regenwasser gut ablaufen.

Dass der Ausklappabschnitt 6 lediglich einen oberen oder lediglich einen unteren Ausklappabschnitt 8, 10 aufweist, kann vorteilhaft sein, da lediglich ein Scharnier bzw. eine Klappachse benötigt wird. Die Fahrzeuginnenraum-Erweiterung 14 weist ein kleineres Volumen auf, bietet aber auch weniger Angriffsfläche für Seitenwind.

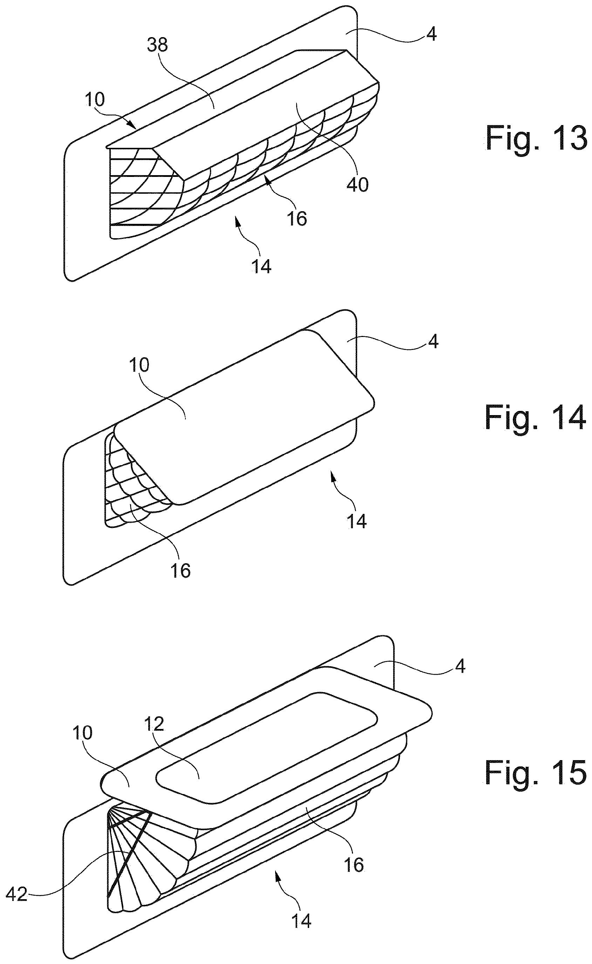

Fig. 13 zeigt den oberen Ausklappabschnitt 10, der in einen ersten Teil 38 und einen zweiten Teil 40 unterteilt ist. Der erste Teil 38 steht dabei senkrecht aus dem Hauptabschnitt 4 hervor. Der zweite Teil 40 ist relativ zum ersten Teil 38 abgewinkelt. Durch die schräge Ausrichtung des zweiten Teils 40 kann Schnee vom oberen Ausklappabschnitt 10 abrutschen bzw. Regenwasser ablaufen.

Fig. 14 zeigt den oberen Ausklappabschnitt 10, der aus dem Hauptabschnitt 4 herausschwingt. D.h. der obere Ausklappabschnitt 10 klappt nicht einfach an einer Klappachse aus dem Hauptabschnitt 4, sondern ist im ausgeklappten Zustand zusätzlich von dem Hauptabschnitt 4 beabstandet. Dies wird durch eine Schwenkbewegung des oberen Ausklappabschnitts 10 bewirkt, wobei der obere Ausklappabschnitt 10 aus dem Hauptabschnitt herausgezogen und anschließend nach oben geklappt wird. Der obere Ausklappabschnitt 10 ist im ausgeklappten Zustand schräg zum Hauptabschnitt 4 ausgerichtet. Im ausgeklappten Zustand ist also ein Abschnitt der seitlichen Umwandung 16 zwischen der Kante des oberen Ausklappabschnitts 10, die dem Hauptabschnitt 4 am nächsten ist, und dem Hauptabschnitt 4 angeordnet. Die seitliche Umwandung 16 bewirkt durch ihre Ausgestaltung das Ausschwenken des oberen Ausklappabschnitts 10 beim Aufblasen.

Fig. 15 zeigt den ausschwingenden oberen Ausklappabschnitt 10 mit einem zusätzlichen Ausschwenkmechanismus 42. Der Ausschwenkmechanismus 42 kann ein (Führungs-)Gestänge aufweisen, das im eingeklappten Zustand bündig am Hauptabschnitt 4 anliegt. Beim Aufblasen der seitlichen Umwandung 16 schwenken die Stangen aus dem Hauptabschnitt 4 aus und bewirken die Ausschwenkbewegung des oberen Ausklappabschnitts 10. Vorzugsweise ist an beiden kurzen Seiten des Ausklappabschnitts 6 jeweils ein Ausschwenkmechanismus 42 angeordnet.

Ein Verfahren zum Ausklappen der Fahrzeuginnenraum-Erweiterung 14 weist einen Verfahrensschritt auf. In dem Verfahrensschritt wird die seitliche Umwandung 16 der Fahrzeuginnenraum-Erweiterung 14 mit einem Fluid, insbesondere Druckluft, aufgeblasen oder aufgepumpt. Gleichzeitig klappt der Ausklappabschnitt 6 durch das Aufblasen oder Aufpumpen der seitlichen Umwandung 16 aus der Fahrzeugseitenwand 2 nach außen hervor. Dabei kann ein unterer Ausklappabschnitt 8 nach unten in Schwerkraftrichtung und ein oberer Ausklappabschnitt 10 nach oben entgegen der Schwerkraftrichtung ausklappen.

### Bezugszeichenliste

- 1: Fahrzeug
- 2: Fahrzeugseitenwand
- 4: Hauptabschnitt
- 6: Ausklappabschnitt
- 8: unterer Ausklappabschnitt (Boden)
- 10: oberer Ausklappabschnitt (Decke)
- 12: Fenster
- 14: Fahrzeuginnenraum-Erweiterung
- 16: Umwandung
- 18: Falt- oder Klappkante
- 20: erste Seitenwand
- 22: zweite Seitenwand
- 24: dritte Seitenwand
- 26: zweites Fenster
- 28: Scharnier
- 30: Trennlinie
- 32: Seil
- 34: Umlenkrolle
- 36: Verriegelung
- 38: erster Teil
- 40: zweiter Teil
- 42: Ausschwenkmechanismus

## Patentansprüche

1. Fahrzeug (1), insbesondere Kastenwagen oder Camper-Van, mit einer Fahrzeugseitenwand (2), die einen Hauptabschnitt (4) und einen Ausklappabschnitt (6) aufweist, wobei der Ausklappabschnitt (6) in einem eingeklappten Zustand im Wesentlichen bündig mit dem Hauptabschnitt (4) abschließt und in einem ausgeklappten Zustand aus dem Hauptabschnitt (4) ausgeklappt ist und eine Fahrzeuginnenraum-Erweiterung (14) mit einer seitlichen Umwandung (16) aus einem flexiblen, ganz oder teilweise aufblasbaren textilen Element aufspannt.

2. Fahrzeug (1) nach Anspruch 1, **dadurch gekennzeichnet, dass** der Ausklappabschnitt (6) zwei Ausklappabschnitte aufweist, die jeweils mit Scharnieren klappbar an dem Hauptabschnitt (4) der Fahrzeugseitenwand (2) angebracht sind.

3. Fahrzeug (1) nach Anspruch 2, **dadurch gekennzeichnet, dass** im eingeklappten Zustand die zwei Ausklappabschnitte durch eine Verriegelung (36) an dem Hauptabschnitt (4) der Fahrzeugseitenwand (2) befestigt sind.

4. Fahrzeug (1) nach einem der Ansprüche 1 bis 3, **dadurch gekennzeichnet, dass** der Ausklappabschnitt (6) Stützen aufweist, die beim Ausklappen des Ausklappabschnitts (6) zum Boden hin ausklappbar sind und den Ausklappabschnitt (6) zusätzlich abstützen.

5. Fahrzeug (1) nach einem der Ansprüche 1 bis 4, **dadurch gekennzeichnet, dass** der Ausklappabschnitt (6) zwei Ausklappabschnitte aufweist, die jeweils entlang einer Dreh- oder Klappachse klappbar sind, die in einer Höhenrichtung des Fahrzeugs (1) verläuft, und wobei die zwei Ausklappabschnitte im ausgeklappten Zustand der Fahrzeuginnenraum-Erweiterung (14) die Seitenwände der Fahrzeuginnenraum-Erweiterung (14) ausbilden.

6. Fahrzeug (1) nach einem der Ansprüche 1 bis 4, **dadurch gekennzeichnet, dass** der Ausklappabschnitt (6) einen unteren Ausklappabschnitt (8) und einen oberen Ausklappabschnitt (10) aufweist, wobei der untere Ausklappabschnitt (8) als ein Bodenabschnitt der Fahrzeuginnenraum-Erweiterung (14) und der obere Ausklappabschnitt (10) als ein Deckenabschnitt der Fahrzeuginnenraum-Erweiterung (14) aus der Fahrzeugseitenwand (2) ausklappbar sind.

7. Fahrzeug (1) nach Anspruch 6, **dadurch gekennzeichnet, dass** die seitliche Umwandung (16) in dem ausgeklappten Zustand den unteren Ausklappabschnitt (8) und den oberen Ausklappabschnitt (10) miteinander verbindet, um die Fahrzeuginnenraum-Erweiterung (14) nach außen abzugrenzen.

8. Fahrzeug (1) nach Anspruch 6 oder 7, **dadurch gekennzeichnet, dass** der obere Ausklappabschnitt (10) und der untere Ausklappabschnitt (8) in dem ausgeklappten Zustand der Fahrzeuginnenraum-Erweiterung (14) jeweils senkrecht zur Fahrzeugseitenwand (2), und insbesondere horizontal, ausgerichtet sind.

9. Fahrzeug (1) nach einem der Ansprüche 6 bis 8, **dadurch gekennzeichnet, dass** der untere Ausklappabschnitt (8) und der obere Ausklappabschnitt (10) miteinander über einen Kopplungsmechanismus, insbesondere über einen Seilzug (32, 34), gekoppelt sind, sodass einer der beiden Ausklappabschnitte (8, 10), der in Schwerkraftrichtung betätigt ist, den anderen der beiden Ausklappabschnitte (8, 10) entgegen der Schwerkraftrichtung betätigt.

10. Fahrzeug (1) nach einem der Ansprüche 1 bis 9, **dadurch gekennzeichnet, dass** die seitliche Umwandung (16) zumindest drei Seitenwände aufweist, wobei eine erste Seitenwand (20) und eine zweite Seitenwand (22) im Wesentlichen senkrecht zu der Fahrzeugseitenwand (2) und eine dritte Seitenwand (24) im Wesentlichen parallel zu der Fahrzeugseitenwand (2) angeordnet sind, und wobei die dritte Seitenwand (24) die erste Seitenwand (20) und die zweite Seitenwand (22) miteinander verbindet.

11. Fahrzeug (1) nach einem der Ansprüche 1 bis 4, **dadurch gekennzeichnet, dass** sich ein unterer Ausklappabschnitt (8) über die gesamte Höhe des Ausklappabschnitts (6) erstreckt und im ausgeklappten Zustand der Fahrzeuginnenraum-Erweiterung (14) den Bodenabschnitt ausbildet und die seitliche Umwandung (16) die übrigen Seitenwände der Fahrzeuginnenraum-Erweiterung (14) ausbildet.

12. Fahrzeug (1) nach einem der Ansprüche 1 bis 4, **dadurch gekennzeichnet, dass** sich ein oberer Ausklappabschnitt (10) über die gesamte Höhe des Ausklappabschnitts (6) erstreckt und im ausgeklappten Zustand der Fahrzeuginnenraum-Erweiterung (14) den Deckenabschnitt ausbildet und die seitliche Umwandung (16) die übrigen Seitenwände der Fahrzeuginnenraum-Erweiterung (14) ausbildet.

13. Fahrzeug (1) nach einem der Ansprüche 1 bis 12, **dadurch gekennzeichnet, dass** der Ausklappabschnitt (6) beim Ausklappen aus dem Hauptabschnitt (4) gleichzeitig ausklappt und ausfährt und der Ausklappabschnitt (6) somit im ausgeklappten Zustand der Fahrzeuginnenraum-Erweiterung (14) von dem Hauptabschnitt (4) beabstandet ist.

14. Verfahren zum Ausklappen einer Fahrzeuginnenraum-Erweiterung (14) eines Fahrzeugs (1), insbesondere Kastenwagen oder Camper-Van, **gekennzeichnet durch** ein Aufblasen einer seitlichen Umwandung (16) der Fahrzeuginnenraum-Erweiterung (14) mit einem Fluid, wobei die seitliche Umwandung insbesondere ein flexibles, ganz oder teilweise aufblasbares textiles Element ist, und ein damit einhergehendes Ausklappen eines Ausklappabschnitts (6) aus einem Hauptabschnitt (4) einer Fahrzeugseitenwand (2) durch das Aufblasen der seitlichen Umwandung (16).

15. Verfahren nach Anspruch 14, **dadurch gekennzeichnet, dass** beim Ausklappen des Ausklappabschnitts (6) durch das Aufblasen der seitlichen Umwandung (16) ein unterer Ausklappabschnitt (8) des Ausklappabschnitts (6) in Schwerkraftrichtung und ein oberer Ausklappabschnitt (10) des Ausklappabschnitts (6) entgegen der Schwerkraftrichtung ausklappt.
